# EUROPEAN PATENT SPECIFICATION

(11) **EP 2 618 943 B1**
(45) Date of publication and mention of the grant of the patent: **17.08.2016**
(21) Application number: 11760688.9
(22) Date of filing: 16.09.2011
(51) Int. Cl.: B05C 5/02, B05B 13/00, G05D 1/02

(54) **APPARATUS AND METHOD FOR TREATMENT OF STRUCTURAL PARTS**
VORRICHTUNG UND VERFAHREN ZUR BEHANDLUNG VON BAUTEILEN
APPAREIL ET PROCÉDÉ DE TRAITEMENT DE PIÈCES DE STRUCTURE

(30) Priority: 23.09.2010 US 385767 P; 23.09.2010 GB 201016003
(43) Date of publication of application: 31.07.2013
(73) Proprietor: Vestas Wind Systems A/S, 8200 Aarhus N (DK)
(72) Inventor: HOLLOWAY, Gary, Newport PO30 5TR (GB)
(74) Representative: Vestas Patents Department
(86) International application number: PCT/DK2011/050350
(87) International publication number: WO 2012/037939

(56) References cited:
- EP-A1- 2 095 884
- EP-A2- 1 506 819
- US-A- 5 974 348
- US-B2- 7 483 510

## Description

### TECHNICAL FIELD

The invention relates to an apparatus and method for the treatment of structural parts. In particular aspects, the invention relates to the treatment and modification of large structural parts by moving a processing vehicle along the structural part. The invention is suitable for the use in the manufacture of wind turbine blades.

### BACKGROUND TO THE INVENTION

Processing of large structural parts, such as a blade for a large wind turbine, is problematic because the available approaches are expensive, have technical disadvantages, or both.

One solution is to rely heavily on skilled manpower, and to fix the structural part in place with skilled personnel carrying out processing operations (such as drilling, trimming, applying adhesive and bonding, and so on) in situ at necessary locations along the structural part. This leads to high labour costs, and may also lead to irregularity in processing, particularly where a continuous process is required, such as applying a line of adhesive along the length of the structural part.

Another solution is design an automated assembly that is adapted to retain the structural part and to process it along its length. While this would be the preferred solution for processing of relatively small parts, for a structural part that is more than 10m long, say, this will lead to an extremely expensive assembly. Such an automated assembly would typically also be capable of processing only one structural part at a time, and the set-up and removal times at the start and the end of the process would be significant. For large structural parts, such an approach would provide effective processing but at significant costs in infrastructural expense and production time.

It is therefore desirable to find a method of processing large structural parts that retains the efficiency of an automated process while allowing for greater flexibility of operation.

EP1506819 and EP2095884 describe gantries for treating parts which move along a pair of guide rails. US5974348 describes an automated system for agricultural tasks. US7483510 describes an X-ray inspection system for inspecting vehicles and cargo containers.

### SUMMARY OF THE INVENTION

According to one aspect of the present invention, there is provided an apparatus for modification or treatment of a structural part in manufacturing as defined in claim 1.

This approach allows for effective automation of modification and treatment processes, but in a way which is effective both in reducing capital expenditure and in processing time, as will be described below.

This approach is particularly advantageous where the one or more tools are adapted for continuous modification or treatment of the structural part. The apparatus is adapted to perform such operations particularly effectively. In one embodiment, the one or more tools are adapted for applying adhesive to the structural part.

The apparatus comprises a guide means, wherein the guide means is adapted such that the structural part is modified or treated by the one or more tools at predetermined points or along a predetermined path. The guide means controls a position of the one or more tools in response to one or more sensors, wherein the one or more sensors are adapted to detect one or more features of the structural part. These features may be a designed path, or they may simply allow for correspondence of the physical structural map with a model held by the guide means - which may comprise an appropriately driven mounting for the one or more tools.

According to a further aspect of the present invention, there is provided a method as defined in claim 4 of modifying or treating one or more structural parts, the structural part being a part or a whole of a wind turbine blade, comprising: defining a predetermined path for an automatic guided vehicle; mounting the one or more structural parts for modification or treatment adjacent to the automatic guided vehicle path; and moving an apparatus as described above along the predetermined path while the apparatus modifies or treats the one or more structural parts.

Preferably, a plurality of structural parts are mounted adjacent to the predetermined path and are modified or treated in sequence when the apparatus moves along the predetermined path.

### BRIEF DESCRIPTION OF THE DRAWINGS

The invention will now be described, by way of example only, by reference to the following drawings in which:
Figure 1 shows a processing vehicle according to an embodiment of the invention in use to modify a structural part;
Figure 2 shows the processing vehicle of Figure 1 in more detail; and
Figure 3 illustrates a process for use of the processing vehicle of Figure 1 to modify a plurality of structural parts.

### DETAILED DESCRIPTION OF PREFERRED EMBODIMENTS

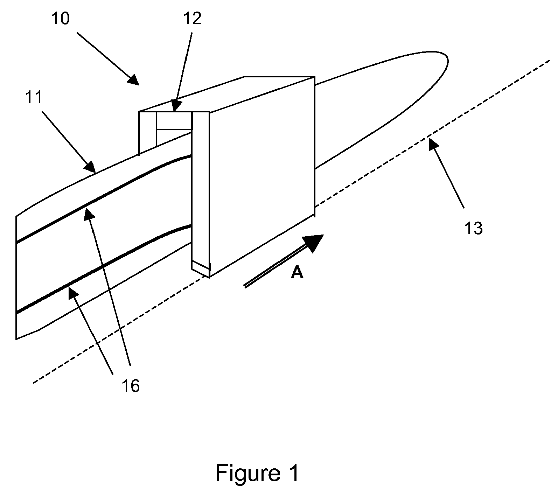

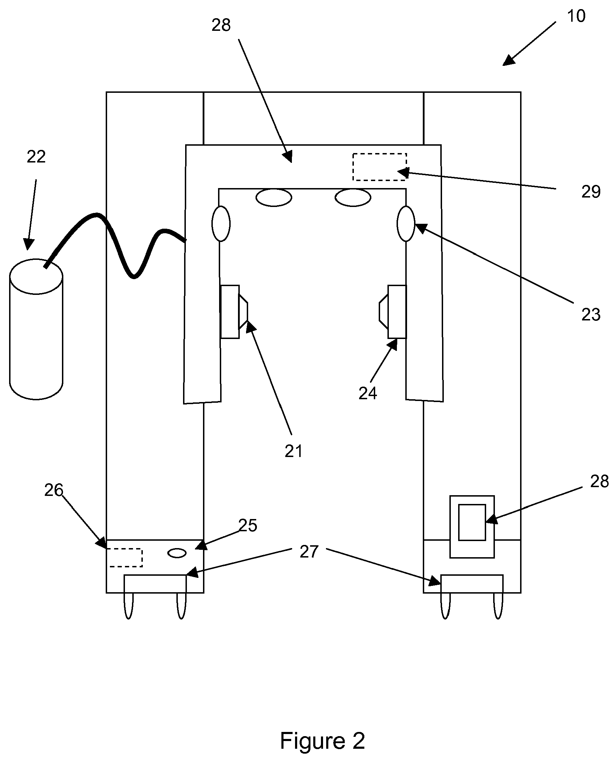

Figure 1 shows a processing vehicle 10 according to an embodiment of the invention in use to process a structural part 11 - in this case, a blade of a wind turbine. The processing vehicle 10 has a portal part 12, which extends around the structural part 11. The structural part 11 will in general require a support structure - not shown in Figure 1 - this may be conventional in form, but should be constructed so as to allow the processing vehicle 10 to move along the length of the structural part 11 with the structural part passing through the portal part 12 - unless the structural part is sufficiently rigid and strong that it can be supported essentially from one end, this may require a support jig underneath the structural part 11 in use. One or more tools 21 (shown in Figure 2) are mounted on an inner surface of the portal part 12 facing the structural part. In the arrangement shown here, these tools are applicator heads for an adhesive applicator - a reservoir 22 for providing adhesive is shown in Figure 2. Again, the support structure for the structural part 11 will need to be arranged so that it does not obstruct the tools 21 in use. The processing vehicle 10 is moving in the direction indicated by arrow A - adhesive lines 16 have been formed on the structural part 11 by operation of the applicator heads to deposit adhesive on the surface of the structural part. The processing vehicle 10 operates as an automatic guided vehicle, and follows a guide line 13 shown here as built in to the floor of the factory space where the processing is taking place.

The vehicle 10 is shown in more detail in Figure 2.

Automatic guided vehicles (AGVs) are known in fields such as warehouse automation, and the skilled person will appreciate that some or all of the conventional approaches to automatic guided vehicle design may be used here, with factory environment determining which of these approaches will be the most appropriate. Technologies include wired sensing (with a buried wire in the factory floor used to define the guide line and provide an RF signal for a RF sensor in the AGV to track) and magnetic tape and coloured tape sensing which operate similarly with different sensors. A laser guidance system (with the AGV emitting laser light and steering to respond to signals received from reflective targets) is another approach to guidance that may be used, as is the use of an inertial tracking system using a gyroscopic sensor. It is also possible that elements of a support jig underneath the structural part may be used by the AGV for guidance purposes, as these will have a consistent relationship with the structural part that they retain. This list is not exhaustive, and the person skilled in the art will appreciate that other guidance technologies could also be used if more technically convenient.

An automatic guided vehicle will thus typically require a detector 25 to allow it to sense the guide line 13 or other guide mechanism, a processor 26 to allow it to determine the disposition of the vehicle with respect to the guide line 13 and a steering mechanism 27 (such as a differential speed control with multiple sets of driven wheels connected to a common drive train or steered wheel control as for a conventional automobile) such that the processor can control the vehicle in order to ensure that it follows the guide line 13. One practical consideration is that in order to provide an effective support structure for the structural part 11, it may not be desirable for any part of the vehicle 10 other than the upper bridge part of the portal 12 to span across the structural part 11 - this would rule out any steering solution which would involve wheels on an axle which spans across the whole vehicle, but this still leaves conventional solutions available.

The processor will typically also be used to control all other aspects of the operation of the vehicle, such as its speed, acceleration and deceleration. A user interface for control and reprogramming of the processing vehicle 10 may be provided at the vehicle itself (user interface 28) or remotely through wired or wireless communication with the processing vehicle 10, or both. This programming may be essentially conventional and the skilled person will appreciate that the requirements are essentially similar to those already known in the automated guided vehicle art.

The applicator heads 21 are connected to the reservoir 22, which moves along with the vehicle 10. The automatic guided vehicle will provide approximate control of the position of the applicator heads 21 with respect to the structural part 11, but this will generally not be sufficient to allow sufficiently accurate control of applicator head position. Consequently the applicator heads 21 are provided as part of an industrial robot 28, which contains at least one detector 23 to determine the relative position of features of the structural part, a mounting 24 for each applicator head which can be driven to move the applicator head to the desired position, and a processor 29 for moving the applicator heads 21 to a desired position by use of the mounting 24 in response to signals received from the one or more detectors 23.

The industrial robot 28 needs to be programmed in order to process the structural part 11 correctly, for example by applying adhesive at a correct position. The processor 29 may or may not interact with processor 26 (for example, by using a position indication from processor 26) to obtain an input for this purpose - the two processors 26, 29 may indeed be combined into one processor - but processor 29 will predominantly obtain inputs from detectors 23 to determine the relative position of the applicator heads 21 and the structural part 11. In a simplest implementation of the industrial robot 28, a path may be already defined on the structural part 11, in which case the path is detected by the processor 29 from signals received from the detectors 23 and the mounting 24 driven so that the applicator heads follow the path. Alternatively, the processor 29 detects points which enable it to determine the correspondence of the physical part to a stored map of the part, and drives the mounting 24 to position the applicator heads 21 to apply adhesive in correspondence with this map.

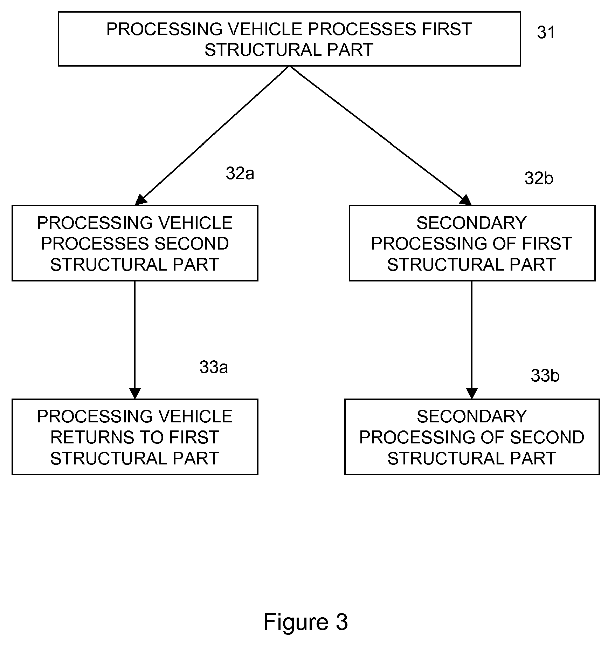

The use of a vehicle of this type significantly reduces the cost and complexity compared to the conventional approach to automation, which would be to provide a rig to support the whole structural part. There is an additional benefit, which is that this approach can increase efficiency and reduce processing time by allowing parts to be processed in parallel by using a guide line which passes by more than one structural part, as shown schematically in Figure 3. In step 31, the vehicle 10 processes a first structural part as the guide line passes next to this part. In step 32a, the vehicle processes a second structural part as the guide line passes next to this further part - meanwhile, in step 32b, a secondary processing step is carried out on the first structural part using other apparatus. In step 33a, the vehicle 10 returns for further processing of the first structural part - this may be a further processing step of the same type as before, but another possibility is that the industrial robot 28 will be replaced on the portal part 12 by another robot adapted to carry out a different function. In step 33b, secondary processing is carried out on the second structural part.

Apparatus and methods as described here can thus provide the advantages of automation in processing large structural parts at reduced cost and with reduced processing time.

## Claims

1. An apparatus for modification or treatment of a structural part (11) in manufacturing, the structural part being a part or a whole of a wind turbine blade, comprising:
an automatic guided vehicle (10) adapted to move by detecting a predetermined path (13) and steering the vehicle to move along the predetermined path;
a portal (12) mounted on the automatic guided vehicle (10) such that a structural part (11) passes through the portal when the vehicle moves along the predetermined (10) path;
one or more tools (21) mounted on the portal to modify or treat the structural part (11) as the vehicle moves along the predetermined path;
**characterized in that**
the apparatus further comprises a guide means, wherein the guide means is adapted such that the structural part (11) is modified or treated by the one or more tools (21) at predetermined points or along a predetermined path and the guide means controls a position of the one or more tools (21) in response to one or more sensors, wherein the one or more sensors are adapted to detect one or more features of the structural part (11).

2. An apparatus as claimed in claim 1, wherein the one or more tools (21) are adapted for continuous modification or treatment of the structural part (11).

3. An apparatus as claimed in claim 1 or claim 2, wherein the one or more tools (21) are adapted for applying adhesive to the structural part (11).

4. A method of modifying or treating one or more structural parts (11), the structural part being a part or a whole of a wind turbine blade, comprising:
defining a predetermined path (13) for an automatic guided vehicle (10);
mounting the one or more structural parts (11) for modification or treatment adjacent to the automatic guided vehicle path; and
moving an apparatus as claimed in any of claims 1 to 3 along the predetermined path (13) while the apparatus modifies or treats the one or more structural parts (11).

5. A method as claimed in claim 4, wherein a plurality of structural parts (11) are mounted adjacent to the predetermined path (13) and are modified or treated in sequence when the apparatus moves along the predetermined path.

## Patentansprüche

1. Eine Vorrichtung zur Modifizierung oder Behandlung von einem strukturellen Bauteil (11) bei einer Herstellung, wobei das strukturelle Bauteil ein Teil oder ein Ganzes von einem Windturbinenblatt ist, aufweisend:
ein automatisches geführtes Fahrzeug (10), das dazu angepasst ist, um sich zu bewegen durch Detektieren eines vorbestimmten Weges (13) und Steuern des Fahrzeuges zum Bewegen entlang des vorbestimmten Weges;
ein Portal (12), das auf dem automatischen geführten Fahrzeug (10) montiert ist, so dass ein strukturelles Bauteil (11) durch das Portal hindurch verläuft, wenn sich das Fahrzeug entlang des vorbestimmten (10) Weges bewegt;
ein oder mehrere Werkzeuge (21), die an dem Portal montiert sind, um das strukturelle Bauteil (11) zu modifizieren oder zu behandeln, während sich das Fahrzeug entlang des vorbestimmten Weges bewegt;
**dadurch gekennzeichnet, dass**
die Vorrichtung weiter ein Führungsmittel aufweist, wobei das Führungsmittel angepasst ist, so dass das strukturelle Bauteil (11) an vorbestimmten Punkten oder entlang eines vorbestimmten Weges durch das eine oder die mehreren Werkzeuge (21) modifiziert oder behandelt wird und das Führungsmittel als Reaktion auf ein oder mehrere Sensoren eine Position von dem einen oder den mehreren Werkzeugen (21) steuert, wobei der eine oder die mehreren Sensoren angepasst sind, um ein oder mehrere Merkmale von dem strukturellen Bauteil (11) zu detektieren.

2. Eine Vorrichtung wie in Anspruch 1 beansprucht, wobei das eine oder die mehreren Werkzeuge (21) für eine kontinuierliche Modifizierung oder Behandlung von dem strukturellen Bauteil (11) angepasst sind.

3. Eine Vorrichtung wie in Anspruch 1 oder Anspruch 2 beansprucht, wobei das eine oder die mehreren Werkzeuge (21) zum Aufbringen eines Klebstoffs auf das strukturelle Bauteil (11) angepasst sind.

4. Ein Verfahren zum Modifizieren oder Behandeln eines oder mehrerer struktureller Bauteile (11), wobei das strukturelle Bauteil ein Teil oder ein Ganzes von einem Windturbinenblatt ist, aufweisend:
Definieren eines vordefinierten Weges (13) für ein automatisches geführtes Fahrzeug (10);
Montieren des einen oder der mehreren strukturellen Bauteile (11) für eine Modifizierung oder Behandlung benachbart zu dem Weg des automatischen geführten Fahrzeugs; und
Bewegen einer Vorrichtung wie in einem der Ansprüche 1 bis 3 beansprucht entlang des vorbestimmten Weges (13), während die Vorrichtung das eine oder die mehreren strukturellen Bauteile (11) modifiziert oder behandelt.

5. Ein Verfahren wie in Anspruch 4 beansprucht, wobei eine Vielzahl von strukturellen Bauteilen (11) benachbart zu dem vorbestimmten Weg (13) montiert sind und der Reihe nach modifiziert oder behandelt werden, wenn sich die Vorrichtung entlang des vordefinierten Weges bewegt.

## Revendications

1. Appareil pour la modification ou le traitement d'une partie structurelle (11) en fabrication, la partie structurelle étant une partie ou un ensemble d'une pale d'éolienne, comprenant :
un véhicule à guidage automatique (10) adapté pour se déplacer par la détection d'une voie prédéterminée (13) et diriger le véhicule pour son déplacement le long de la voie prédéterminée ;
un portail (12) monté sur le véhicule à guidage automatique (10) de sorte qu'une partie structurelle (11) passe par le portail lorsque le véhicule se déplace le long de la voie prédéterminée (10) ;
un ou plusieurs outils (21) montés sur le portail pour modifier ou traiter la partie structurelle (11) lorsque le véhicule se déplace le long de la voie prédéterminée ;
**caractérisé en ce que**
l'appareil comprend en outre un moyen de guidage, dans lequel le moyen de guidage est adapté de sorte que la partie structurelle (11) soit modifiée ou traitée par l'un ou plusieurs outils (21) sur des points prédéterminés ou le long d'une voie prédéterminée et le moyen de guidage commande une position d'un ou plusieurs outils (21) en réponse à un ou plusieurs capteurs, dans lequel l'un ou plusieurs capteurs sont adaptés pour détecter une ou plusieurs particularités de la partie structurelle (11).

2. Appareil selon la revendication 1, dans lequel l'un ou plusieurs outils (21) sont adaptés pour la modification ou le traitement continu de la partie structurelle (11) .

3. Appareil selon la revendication 1 ou la revendication 2, dans lequel l'un ou plusieurs outils (21) sont adaptés pour appliquer un adhésif à la partie structurelle (11) .

4. Procédé de modification ou de traitement d'une ou plusieurs parties structurelles (11), la partie structurelle étant une partie ou un ensemble d'une pale d'éolienne comprenant :
la définition d'une voie prédéterminée (13) pour un véhicule à guidage automatique (10) ;
le montage de l'une ou plusieurs parties structurelles (11) pour la modification ou le traitement de manière adjacente à la voie de véhicule à guidage automatique ; et
le déplacement d'un appareil selon l'une quelconque des revendications 1 à 3 le long de la voie prédéterminée (13) alors que l'appareil modifie ou traite l'une ou plusieurs parties structurelles (11).

5. Procédé selon la revendication 4, dans lequel une pluralité de parties structurelles (11) sont montées de manière adjacente à la voie prédéterminée (13) et sont modifiées ou traitées en séquence lorsque l'appareil se déplace le long de la voie prédéterminée.
